# EUROPÄISCHE PATENTSCHRIFT

(11) **EP 0 455 050 B1**
(45) Veröffentlichungstag und Bekanntmachung des Hinweises auf die Patenterteilung: **02.03.1994**
(21) Anmeldenummer: 91106176.0
(22) Anmeldetag: 18.04.1991
(51) Int. Cl.: A22C 11/02

(54) **Magazinvorrichtung für Wursthüllen**
Storage device for sausage casings
Magasin pour boyaux de saucisses

(30) Priorität: 04.05.1990 DE 4014410
(43) Veröffentlichungstag der Anmeldung: 06.11.1991
(73) Patentinhaber: VEMAG Maschinenbau GmbH, D-27266 Verden (Aller) (DE)
(72) Erfinder: Stapelfeldt, Klaus, W-2807 Achim (DE); Frerichs, Hayo, W-2810 Verden (DE)
(74) Vertreter: Eisenführ, Speiser & Partner

(56) Entgegenhaltungen:
- EP-A- 0 183 229
- DE-A- 3 024 509
- GB-A- 2 077 244
- US-A- 3 150 410
- US-A- 3 191 222
- US-A- 3 672 001

## Beschreibung

Die Erfindung betrifft eine Magazinvorrichtung für Wursthüllen, insbesondere für in ihrer Längsrichtung raupenförmig zusammengeraffte Wursthüllen, mit
- einem eine Bodenplatte aufweisenden Vorlagebehälter zur Aufnahme mehrerer Lagen von Wursthüllen und
- einem gegenüber der Horizontalen geneigten, vom Vorlagebehälter nach unten zu Ausgabemitteln zur Ausgabe einer Wursthülle führenden Zuführschacht, dessen lichte Weite nur geringfügig größer als der Durchmesser der Wursthüllen ist und durch den sich die Wursthüllen der Reihe nach hintereinander in Richtung quer zu ihrer Länge vom Vorlagebehälter zu den Ausgabemitteln infolge Schwerkrafteinflusses bewegen.

Bei einer aus der DE-PS 30 91 981 bekannten Magazinvorrichtung dieser Art ist der Zuführschacht seitlich an den Vorlagebehälter angesetzt und mündet in dessen Bodenplatte. Die Bodenplatte ist geneigt angeordnet und steigt zur Öffnung des Zuführschachtes an. An der Bodenplatte sind kraftbetriebene Fördermittel vorgesehen, die die unterste Lage von Wursthüllen quer zu ihrer Länge vom untersten Punkt der Bodenplatte zur Öffnung des Zuführschachtes hinaufbefördern. Ferner sind Rückfördermittel zum Rückfördern von auf der untersten Lage aufliegenden weiteren Wursthüllen vorgesehen. Auf diese Weise wird erreicht, daß immer nur die unterste Lage von Wursthüllen in den Zuführschacht gelangt.

Der Zuführschacht wird nach unten durch einen leistenförmigen Schachtboden abgeschlossen, auf den jeweils die unterste Wursthülle nach Durchlaufen des Zuführschachtes auftrifft. Es sind Ausgabemittel vorgesehen, die die unterste Wursthülle aus dem Zuführschacht heraus ziehen und koaxial zu einem Füllrohr ausrichtet, auf das die Wursthülle anschließend aufgezogen wird.

Insbesondere durch die Anbringung der kraftbetriebenen Fördermittel erfordert jedoch die bekannte Magazinvorrichtung einen erheblichen Aufwand an mechanischen Elementen. Hinzu kommt, daß durch die kraftbetriebenen Fördermittel die Wursthüllen besonders hohen Kräften und Beanspruchungen unterworfen werden, durch die nicht nur die Gefahr einer Beschädigung von besonders empfindlichen Wursthüllen, sondern auch insbesondere bei Wursthüllen mit einer ungleichmäßigen groben Raffstruktur die Gefahr eines unerwünschten gegenseitigen Klemmeingriffes der Wursthüllen mit sich bringen. Mit Hilfe der kraftbetriebenen Fördermittel wird immer die unterste Lage der Wursthüllen unter dem Druck der darüberliegenden Lagen herausgezogen und zum Zuführschacht befördert. Aufgrund dieser gegeneinander erfolgenden Bewegung besteht die Gefahr, daß die gerafften Wursthüllen miteinander verhaken, wodurch eine Trennung und Vereinzelung der Wursthüllen erschwert oder sogar gänzlich verhindert wird. Auch die Entnahme der untersten Wursthülle aus dem unteren Ende des Zuführschachtes weist Probleme auf. Die unterste Wursthülle wird nämlich unter der Berührung mit den noch im Zuführschacht darüberliegenden Wursthüllen und somit unter dem Druck dieser Wursthüllen herausgezogen. Da somit die unterste Wursthülle gegenüber der nächsthöheren Wursthülle verschoben werden muß, erhöht sich die Gefahr, daß sich diese beiden Wursthüllen miteinander verhaken, insbesondere wenn sie eine ungleichmäßige, grobe Raffstruktur aufweisen. Somit sind bei der bekannten Magazinvorrichtung nicht unerhebliche Störquellen vorhanden, die sich insbesondere auf einen automatischen Produktionsablauf nachteilig auswirken. Daher ist die bekannte Magazinvorrichtung im allgemeinen nur anwendbar für sehr eng geraffte Wursthüllen mit nahezu glatter Oberfläche. Dagegen sind insbesondere biegeschlaffe, grob geraffte Wursthüllen und geraffte Wursthüllen mit nichtzylindrischer Form im entrafften Zustand wie z. B. Kranzdärme nicht oder nur unter Inkaufnahme der zuvor geschilderten Probleme verarbeitbar.

Aufgabe der Erfindung ist es daher, die eingangs genannte Magazinvorrichtung derart zu verbessern, daß auch biegeschlaffe, grob geraffte Wursthüllen und geraffte Wursthüllen mit nichtzylindrischer Form im entrafften Zustand sicher und schonend vereinzelt und ausgegeben werden können.

Diese Aufgabe wird dadurch gelöst, daß
- der Zuführschacht mit seinem oberen Ende in den Vorlagebehälter hineinragt und
- die Bodenplatte des Vorlagebehälters zwischen einer untersten Stellung, in der die Bodenplatte mit einem direkt vor dem Zuführschacht endenden Randbereich unterhalb des oberen Endes des Zuführschachtes liegt, und einer obersten Stellung bewegbar ist, in der sich der Randbereich der Bodenplatte im wesentlichen mindestens auf der Höhe der Oberkante des oberen Endes des Zuführschachtes befindet, wobei der Abstand zwischen der Kante des Randbereiches und der gegenüberliegenden Außenseite des Zuführschachtes über den gesamten Bewegungsweg kleiner als der Durchmesser der Wursthüllen ist.

Mit der Erfindung können auch insbesondere biegeschlaffe, grob geraffte Wursthüllen und geraffte Wursthüllen mit nichtzylindrischer Form im entrafften Zustand wie Kranzdärme, also Wursthüllen mit einer ungleichmäßigen, groben Raffstruktur, funktionssicher und schonend vereinzelt und ausgegeben werden. Dies wird erfindungsgemäß dadurch erreicht, daß der Zuführschacht mit seinem oberen Ende in den Vorlagebehälter hineinragt und die Bodenplatte von einer untersten Stellung unterhalb des oberen Endes des Zuführschachtes in eine oberste Stellung bewegbar ist, in der sich die Bodenplatte mit ihrem Randbereich im wesentlichen auf der Höhe der Oberkante des oberen Endes des Zuführschachtes befindet. Ist der Vorlagebehälter mit mehreren Lagen von Wursthüllen angefüllt, wobei die Wursthüllen im wesentlichen parallel zum Zuführschacht liegen, so stützen sie sich gegen die Außenseite des Zuführschachtes ab. Der Zuführschacht wird befüllt, indem die Bodenplatte so nach oben bewegt wird, daß zumindest die dem Zuführschacht am nächsten liegende Wursthülle der obersten Lage in das obere Ende des Zuführschachtes hineinfällt. Damit die Wursthüllen nicht zwischen der Bodenplatte und der Außenseite des Zuführschachtes aus dem Vorlagebehälter herausfallen, muß selbstverständlich der Abstand zwischen der Kante des Randbereiches der Bodenplatte und der gegenüberliegenden Außenseite des Zuführschachtes über den gesamten Bewegungsweg kleiner als der Durchmesser der Wursthüllen sein.

Im Gegensatz zum Stand der Technik wird nicht die unterste Lage der Wursthüllen, sondern jeweils die oberste Lage in den Zuführschacht befördert. Ferner sind im Gegensatz zum Stand der Technik keine kraftbetriebenen Fördermittel notwendig, da die obersten Wursthüllen im Vorratsbehälter einfach durch Schwerkrafteinfluß in den Zuführschacht fallen. Die Wursthüllen werden somit mittels der Erfindung aus dem Vorlagebehälter in besonders schonender Weise in den Zuführschacht befördert, wodurch eine funktionssichere Ausgabe und Vereinzelung der Wursthüllen aus dem Zuführschacht gewährleistet wird. Relativbewegungen zwischen den einzelnen Wursthüllen und Rückförderungen von Wursthüllen sind nahezu ausgeschlossen. Eine bewußte Überförderung und unkontrollierte Rückförderung der Wursthüllen in den Vorlagebehälter kann somit vermieden werden.

Die erfindungsgemäße Magazinvorrichtung ist einfach und robust, hat wenig bewegte Teile, ist unempfindlich gegen Verunreinigungen und läßt sich leicht säubern.

Vorzugsweise ist die Bodenplatte um ein im Abstand zum Zuführschacht angeordnetes Gelenk verschwenkbar. Mit dieser Ausführung wird auf besonders einfache Weise die Bewegbarkeit der Bodenplatte realisiert.

Bei einer weiteren bevorzugten Ausführung ist die Bodenplatte in ihrer untersten Stellung zum Zuführschacht hin schräg nach unten geneigt. Aufgrund der Neigung der Bodenplatte in der untersten Stellung können die Wursthüllen im Vorlagebehälter zum Zuführschacht rollen, damit gewährleistet ist, daß sie sich gegen die Außenseite des Zuführschachtes abstützen. Die an der Außenseite des Zuführschachtes anliegende Wursthülle der obersten Lage kann dann als nächste Wursthülle in den Zuführschacht gegeben werden, wenn die Bodenplatte nach oben bewegt worden ist. Als zweckmäßig hat sich herausgestellt, daß der Neigungswinkel der Bodenplatte gegenüber der Horizontalen in der untersten Stellung etwa 15° beträgt.

Vorzugsweise ist der vor dem Zuführschacht endende Randbereich der Bodenplatte gegenüber dem übrigen Bereich der Bodenplatte entlang einer Knicklinie nach unten abgekantet und in der obersten Stellung der Bodenplatte zur Oberkante des oberen Endes des Zuführschachtes hin schräg nach unten geneigt, wobei die Breite des abgekanteten Randbereiches zwischen dessen Kante und der Knicklinie mindestens dem größten Durchmesser einer zu verarbeitenden Wursthülle entspricht. Bei dieser Ausführung wird insbesondere gewährleistet, daß bei nur teilweiser Beladung des Vorlagebehälters oder beim Leerfahren auch die letzte Wursthülle in den Zuführschacht gegeben werden kann und somit die Beschickung des Zuführschachtes gesichert ist. Liegt nur noch eine Lage von Wursthüllen auf der Bodenplatte des Vorlagebehälters auf, so rollen diese Wursthüllen in der untersten Stellung der Bodenplatte gegen den Zuführschacht, wobei die vorderste Wursthülle auf dem abgekanteten Randbereich liegt und sich an der Außenseite des Zuführschachtes abstützt. Während des Hochschwenkens der Bodenplatte sorgt der abgekantete Randbereich dafür, daß diese vorderste Wursthülle weiterhin an der Außenseite des Zuführschachtes anliegt. Wenn die Bodenplatte mit ihrem abgekanteten Randbereich bis zur Oberkante des oberen Endes des Zuführschachtes hochgeschwenkt ist, so rollt aufgrund der Neigung des abgekanteten Randbereiches diese vorderste Wursthülle über die Oberkante in den Zuführschacht. Damit sichergestellt ist, daß der abgekantete Randbereich auch tatsächlich die vorderste Wursthülle aufnimmt, muß die Breite des abgekanteten Randbereiches zwischen dessen Kante und der Knicklinie mindestens dem größten Durchmesser einer zu verarbeitenden Wursthülle entsprechen.

Als zweckmäßig hat sich herausgestellt, daß der Neigungswinkel des abgekanteten Randbereiches der Bodenplatte in deren oberster Stellung etwa 15° gegenüber der Horizontalen beträgt.

Ferner kann bei dieser Ausführung die Bodenplatte in ihrer obersten Stellung von der Knicklinie in Richtung auf das Gelenk nach unten geneigt verlaufen. Hierdurch wird erreicht, daß in der obersten Stellung der Bodenplatte die übrigen Wursthüllen vom abgekanteten Randbereich wegrollen und die vorderste in den Zuführschacht fallende Wursthülle nicht behindern können. Somit wird auf einfache Weise die in den Zuführschacht zu gebende Wursthülle von den übrigen Wursthüllen getrennt.

Eine weitere Ausführung der Erfindung zeichnet sich aus durch eine Antriebseinrichtung zum Bewegen der Bodenplatte und einen im Zuführschacht angeordneten Sensor zur Erfassung einer im Zuführschacht geführten Wursthülle und zur Ansteuerung der Antriebseinrichtung derart, daß diese die Bodenplatte von ihrer untersten Stellung so lange nach oben bewegt, bis der Sensor eine Wursthülle erfaßt hat, woraufhin die Antriebseinrichtung die Bodenplatte wieder in die unterste Stellung bewegt. Bei dieser Ausführung wird somit die Füllung des Zuführschachtes mit Hilfe eines Sensors überwacht. Meldet der Sensor, daß die von ihm abgefragte Position des Zuführschachtes keine Wursthülle aufweist, wird die Antriebsvorrichtung angesteuert und bewegt die Bodenplatte langsam nach oben. Diese Aufwärtsbewegung wird sofort unterbrochen, wenn der Sensor meldet, daß eine Wursthülle nachgefallen ist. Dann wird die Bodenplatte in ihre unterste Stellung zurückbewegt. Die Bodenplatte wird also nur dann bewegt, wenn eine neue Wursthülle im Zuführschacht benötigt wird. Auf diese Weise wird die Bewegung der Bodenplatte im Vorlagebehälter minimiert, wodurch sich eine schonende Behandlung der Wursthüllen ergibt. Außerdem bietet die sensorkontrollierte Beschickung des Zuführschachtes die Möglichkeit, das Leerfahren des Vorlagebehälters zu überwachen und die nachfolgende Befüllung der Wursthüllen mit Fleischmasse, zu steuern. Außerdem kann das ungewollte Leerfahren des Vorlagebehälters dem Bediener angezeigt werden.

Bei einer weiteren Ausführung der Erfindung ist der Zuführschacht seitlich an den Vorlagebehälter angesetzt und gegenüber dem Vorlagebehälter durch eine gemeinsame Trennwand seitlich abgetrennt, entlang derer die Bodenplatte mit ihrem Randbereich verschwenkbar ist. Mit dieser Ausführung läßt sich eine konstruktiv besonders einfache und platzsparende Anordnung des Zuführschachtes realisieren.

Ferner kann vorzugsweise der Zuführschacht im wesentlichen lotrecht verlaufen, was für eine schnelle und reibungsarme Fallbewegung der Wursthüllen durch den Zuführschacht von besonderem Vorteil ist.

Gemäß einem weiteren Aspekt der Erfindung umfassen die unterhalb des unteren Endes des Zuführschachtes angeordneten Ausgabemittel zur Ausgabe einer Wursthülle in Richtung einer Aufzieheinrichtung zum Aufziehen der Wursthülle auf ein Füllrohr
- ein unterhalb des unteren Endes des Zuführschachtes angeordnetes Auflageelement zum Abstützen einer Wursthülle,
- am unteren Ende des Zuführschachtes bewegbar gehalterte Verschlußmittel, die in einer geöffneten Stellung ein Herausfallen der untersten Wursthülle aus dem Zuführschacht auf das Auflageelement erlauben und bei Bewegung in eine Schließstellung die innerhalb des Zuführschachtes befindliche nächsthöhere Wursthülle mit den ggf. darauf liegenden weiteren Wursthüllen von der auf dem Auflageelement liegenden unteren Wursthülle abheben und den Zuführschacht verschließen, und
- Greifmittel, die die auf dem Auflageelement liegende Wursthülle greifen, von dem Auflageelement ein wenig anheben, ohne die Wursthülle in Berührung mit dem darüber befindlichen Verschlußelement oder der nächsthöheren von dieser gehaltenen Wursthülle zu bringen, und zu der Aufzieheinrichtung transportieren.

Auf diese Weise wird vermieden, daß die unterste Wursthülle unter Berührung durch die nächsthöhere Wursthülle vom unteren Ende des Zuführschachtes zur Aufzieheinrichtung transportiert werden kann. Dies wird erfindungsgemäß dadurch erreicht, daß die Verschlußmittel die nächsthöhere Wursthülle mit den ggf. darauf liegenden weiteren Wursthüllen innerhalb des Zuführschachtes anheben, wenn die Verschlußmittel in die Schließstellung zum Verschließen des Zuführschachtes bewegt werden. Beim Herausziehen der untersten Wursthülle wird somit im Gegensatz zum Stand der Technik jegliche Reibung zwischen der nächsthöheren Wursthülle und dem Auflageelement vermieden. Dies wird erfindungsgemäß dadurch erreicht, daß die Verschlußmittel die nächsthöhere Wursthülle mit den ggf. darauf liegenden weiteren Wursthüllen innerhalb des Zuführschachtes anheben, wenn die Verschlußmittel in die Schließstellung zum Verschließen des Zuführschachtes bewegt werden. Somit wird die nächsthöhere Wursthülle außer Berührungseingriff mit der untersten Wursthülle gebracht, so daß zwischen diesen beiden Wursthüllen ein Zwischenraum gebildet wird. Dabei ist der Abstand zwischen diesen beiden Wursthüllen so groß, daß die Greifmittel die unterste Wursthülle von dem Auflageelement ein wenig anheben können, ohne diese Wursthülle in Berührung mit dem darüber befindlichen Verschlußelement oder der von dieser gehaltenen nächsthöheren Wursthülle zu bringen. Auf diese Weise wird die unterste Wursthülle ebenfalls außer Eingriff mit dem Auflageelement gebracht, so daß sich die von den Greifmitteln gehaltene unterste Wursthülle weder mit den darüber befindlichen Verschlußmitteln oder der von diesen gehaltenen nächsthöheren Wursthülle noch mit dem Auflageelement in Reib- und Berührungseingriff befindet, wenn sie zur Aufzieheinrichtung transportiert wird.

Vorzugsweise heben die Greifmittel die Wursthülle vom Auflageelement in koaxiale Ausrichtung zum Füllrohr der Aufzieheinrichtung an, so daß die Wursthülle nur noch in axialer Richtung zum Füllrohr transportiert zu werden braucht, um auf dieses aufgezogen zu werden.

Eine bevorzugte Ausführung der Erfindung zeichnet sich dadurch aus, daß als Greifmittel eine Zange mit zwei sich gegenüberliegenden und zwischen sich die Wursthülle aufnehmenden Zangenhälften vorgesehen ist, die in Querrichtung zur Länge der Wursthülle zum Schließen aufeinanderzu und zum Öffnen voneinanderweg bewegbar sind.

Bei einer Weiterbildung dieser Ausführung besteht die auf die Wursthülle gerichtete Greiffläche der Zangenhälften aus zwei winklig zueinander angeordneten, mit der Wursthülle in tangentiale Berührung bringbaren Hälften. Die Zangenhälften sind also prismaartig ausgebildet, wodurch ein besonders sicherer und zugleich schonender Berührungseingriff mit der Wursthülle erzielt wird. Zweckmäßigerweise liegen die Schnittlinien beider Greifflächenhälften der beiden Zangenhälften und die Achse des Füllrohres in einer gemeinsamen Ebene. Auf diese Weise wird die Wursthülle in koaxialer Ausrichtung zum Füllrohr angehoben, wenn sie in tangentialen Berührungseingriff mit den Greifflächenhälften der Zangenhälften gelangt, ohne daß die Zangenhälfte eine zusätzliche Aufwärtsbewegung ausführen müssen.

Bei einer weiteren Ausführung der Erfindung ist als Verschlußmittel mindestens eine drehbar gehalterte Klappe vorgesehen, wodurch sich eine besonders einfache Konstruktion der Verschlußmittel ergibt.

Als zweckmäßig hat es sich erwiesen, als Verschlußmittel zwei an gegenüberliegenden Seiten des unteren Endes des Zuführschachtes drehbar gehalterte Rückhalteklappen vorzusehen, die in ihrer geöffneten Stellung eine Verlängerung des unteren Endes des Zuführschachtes und in ihrer Schließstellung einen Spalt zwischen sich bilden, der schmaler als der Durchmesser der Wursthüllen ist. Diese Ausführung bietet eine besonders platzsparende Anordnung der Verschlußmittel am unteren Ende des Zuführschachtes, da die Rückhalteklappen in ihrer Länge verhältnismäßig kurz gehalten werden können. Dies hat zur Folge, daß die Rückhalteklappen in ihrer geöffneten Stellung nicht allzu weit über das untere Ende des Zuführschachtes nach unten ragen, wodurch eine Behinderung der auf dem Auflageelement liegenden untersten Wursthülle beim Schließen der Rückhalteklappen ausgeschlossen ist.

Vorzugsweise sind die Verschlußmittel entweder in die Schließstellung oder in die geöffnete Stellung federnd vorgespannt, so daß zusätzliche Antriebsmittel entfallen können.

Bei einer weiteren bevorzugten Ausführung werden die Verschlußmittel von den Greifmitteln bewegt. Vorzugsweise sind dabei die Verschlußmittel für die Bewegung in die geöffnete Stellung mit den Greifmitteln mechanisch gekoppelt. Bei einer besonderen Weiterbildung dieser Ausführung sind an den Rückhalteklappen Nocken befestigt, die beim Öffnen der Zangen von dieser so betätigt werden, daß die Rückhalteklappen in die geöffnete Stellung gedreht werden.

Eine weitere Ausführung der Erfindung zeichnet sich dadurch aus, daß die Auflagefläche des Auflageelementes aus zwei winklig zueinander angeordnetem, mit der aufliegenden Wursthülle in tangentiale Berührung bringbaren Hälften bestehen. Die Auflagefläche des Auflageelementes ist also prismaartig ausgebildet, wodurch sich ein besonders sicherer Halt der Wursthülle auf dem Auflageelement ergibt.

Nachfolgend wird ein bevorzugtes Ausführungsbeispiel der Erfindung anhand der beiliegenden Zeichnungen näher erläutert. Es zeigen:
- Fig. 1: einen Längsschnitt durch eine Magazinvorrichtung; und
- Fig. 2: eine Seitenansicht auf die Magazinvorrichtung sowie auf ein seitliches angeordnetes Füllrohr.

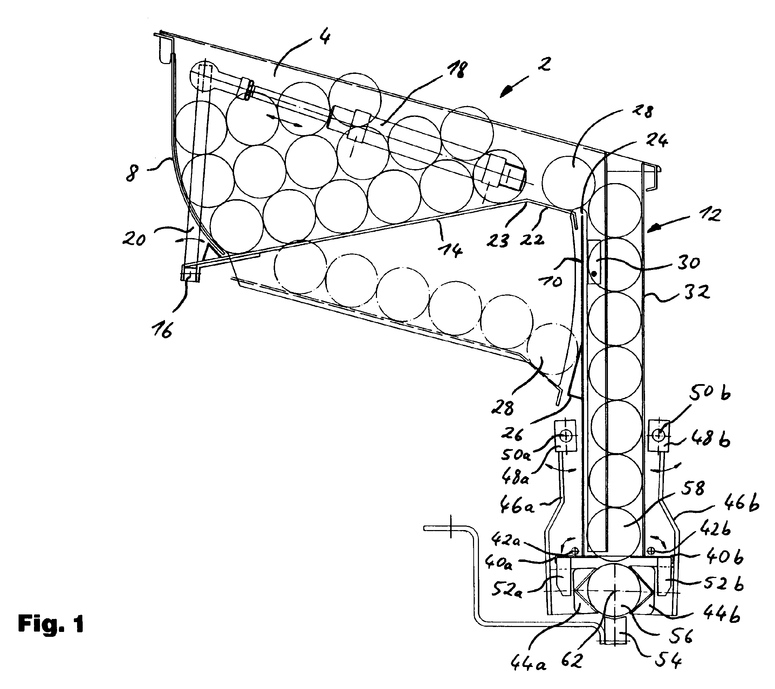

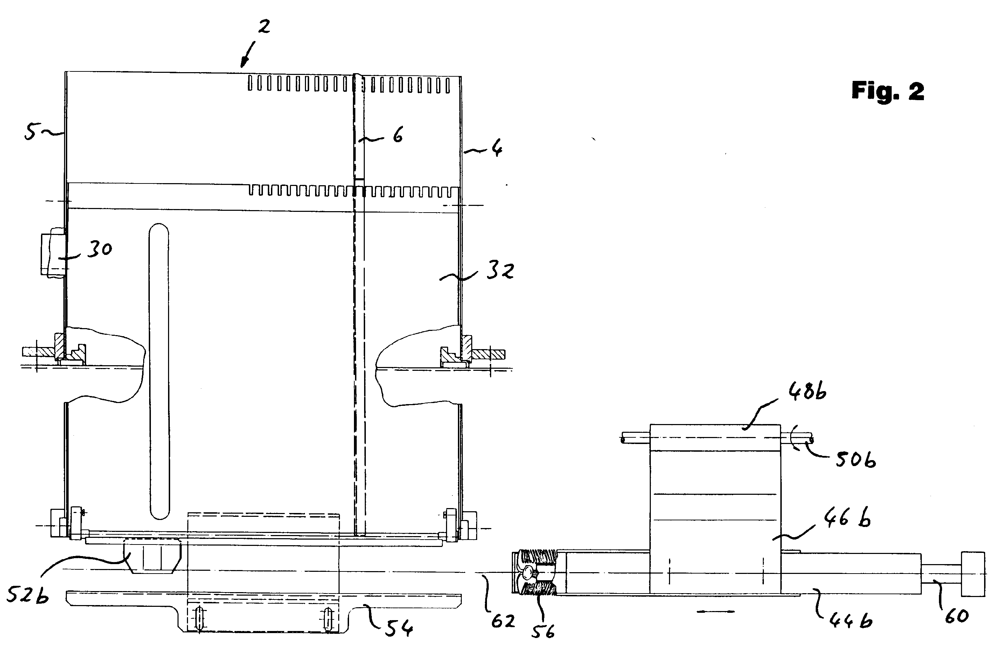

Wie den Fig. 1 und 2 zu entnehmen ist, besitzt die dargestellte Magazinvorrichtung einen Vorlagebehälter 2, der zwei feste Seitenwände 4, 5, eine verstellbare Zwischenwand 6 und eine feste Rückwand 8 aufweist. An der der Rückwand 8 gegenüberliegenden Seite wird der Vorlagebehälter 2 von einer Trennwand 10 begrenzt, die gleichzeitig auch die eine Seitenwand eines seitlich an den Vorlagebehälter 2 angesetzten, lotrechten Zuführschachtes 12 bildet.

Ferner besitzt der Vorlagebehälter 2 eine Bodenplatte 14, die um ein unterhalb der Rückwand 8 angeordnetes Gelenk 16 verschwenkbar ist. Als Antriebseinrichtung zum Verschwenken der Bodenplatte 14 ist ein Pneumatikzylinder 18 vorgesehen, der über ein Gestänge 20 die Bodenplatte 14 betätigt.

Der direkt vor der Trennwand 10 endende Randbereich 22 ist gegenüber dem übrigen Bereich der Bodenplatte 14 entlang einer Knicklinie 23 nach unten abgekantet, und zwar im dargestellten Ausführungsbeispiel um etwa 15° gegenüber der Ebene des übrigen Bereiches der Bodenplatte 14. Die Knicklinie 23 verläuft im wesentlichen parallel zur Trennwand 10. Die Breite des abgekanteten Randbereiches 22 zwischen dessen der Trennwand 10 direkt gegenüberliegender Kante und der Knicklinie 23 entspricht über die gesamte Länge des abgekanteten Randbereiches 22 mindestens dem größten Durchmesser einer zu verarbeitenden Wursthülle. Der abgekantete Randbereich 22 ist wie auch der übrige Bereich der Bodenplatte 14 im wesentlichen eben ausgebildet.

Die Gelenkachse des Gelenkes 16 verläuft im wesentlichen horizontal und parallel zur Trennwand. Die Bodenplatte 14 ist mit ihrem Randbereich 22 entlang der Trennwand 10 zwischen einer untersten Stellung und einer obersten Stellung verschwenkbar. In Fig. 1 ist die Bodenplatte 14 in der untersten Stellung gestrichelt und in der obersten Stellung mit durchgezogenen Linien dargestellt. In der untersten Stellung ist die Bodenplatte 14 zur Trennwand 10 hin schräg nach unten geneigt und liegt mit ihrem Randbereich 22 unterhalb der Oberkante 24 der Trennwand 10, wobei der Abstand der Summe mehrerer Durchmesser der zu verarbeitenden Wursthüllen entsprechen kann. In der obersten Stellung befindet sich der Randbereich 22 mit seiner Kante auf der Höhe der Oberkante 24 der Trennwand 10, wobei in der dargestellten Ausführung der abgekantete Randbereich 22 von der Knicklinie 23 um einen Winkel von etwa 15° zur Oberkante 24 der Trennwand hin schräg nach unten geneigt ist, während der übrige Bereich der Bodenplatte 14 von der Knicklinie 23 in Richtung auf das Gelenk 16 nach unten geneigt verläuft. In der obersten Stellung bildet also die Knicklinie 23 die höchste Stelle der Bodenplatte 14.

Der Vorlagebehälter 2 ist nach oben offen und kann Wursthüllen verschiedener Art, insbesondere biegeschlaffe, grob geraffte Därme mit nicht-zylindrischer Form im entrafften Zustand (Kranzdärme) aufnehmen. Die Wursthüllen werden in mehreren Lagen übereinander auf der Bodenplatte 14 angeordnet und liegen im wesentlichen parallel zum Zuführschacht 12. In der untersten Stellung der Bodenplatte 14 rollen die Wursthüllen, bedingt durch den Neigungswinkel, zur Trennwand 10 und stützen sich gegen die Trennwand 10 ab, wobei die vorderste Wursthülle 28 direkt an der Trennwand 10 anliegt. Der Zuführschacht 12 wird befüllt, indem die schwenkbare Bodenplatte 14 nach oben geschwenkt wird. Dabei bleibt die vorderste Wursthülle 28 auf Grund der Neigung des abgekanteten Randbereiches 22 in berührendem Eingriff mit der Trennwand 10. In der obersten Stellung der Bodenplatte 14 rollt dann die vorderste Wursthülle 28, bedingt durch die Neigung des abgekanteten Randbereiches 22, über die Oberkante 24 der Trennwand 10 und fällt in den Zuführschacht 12, während die übrigen Wursthüllen zur Rückwand 8 hin zurückrollen.

Damit die vorderste Wursthülle 28 nicht zwischen dem Randbereich 22 der Bodenplatte 14 und der Trennwand 10 aus dem Vorlagebehälter 2 herausfällt, muß der Randbereich 22 direkt vor der Trennwand 10 in einem Abstand enden, der über den gesamten Schwenkbereich kleiner als der Durchmesser der Wursthüllen ist. Hierzu ist im Bereich der untersten Stellung der Bodenplatte 14 an der Trennwand 10 ein rampenförmiges Element 26 angebracht, das die in der untersten Stellung entstehende Lücke zwischen der Trennwand 10 und der Kante des abgekanteten Randbereiches 22 der Bodenplatte 14 im wesentlichen schließt.

Liegen die Wursthüllen in mehreren Lagen übereinander auf der Bodenplatte 14, so braucht die Bodenplatte 14 nur soweit nach oben verschwenkt zu werden, bis die vorderste, an der Trennwand 10 anliegende Wursthülle der obersten Lage über die Oberkante 24 der Trennwand 10 rollt und in den Zuführschacht 12 fällt. Zur Steuerung dieser Schwenkbewegung ist ein Sensor 30 vorgesehen, der an der Trennwand 10 innerhalb des Zuführschachtes angebracht ist, und zwar vorzugsweise im oberen Abschnitt des Zuführschachtes 12, wie Fig. 1 zeigt. Der Sensor 30 dient zur Erfassung einer durch den Zuführschacht 12 fallenden Wursthülle und zur Ansteuerung des Pneumatikzylinders 18. Meldet der Sensor 30, daß die von ihm abgefragte Position des Zuführschachtes 12 keine Wursthülle aufweist, wird der Pneumatikzylinder 18 angesteuert und schwenkt die Bodenplatte 14 langsam nach oben. Diese Aufwärtsbewegung wird sofort unterbrochen, wenn der Sensor 30 eine nachfallende Wursthülle erfaßt hat. Dann wird die Bodenplatte 14 in ihre unterste Stellung zurückgeschwenkt. Somit wird die Bodenplatte 14 nur dann verschwenkt, wenn eine neue Wursthülle im Zuführschacht 12 benötigt wird.

Der Zuführschacht 12 wird an seiner dem Vorlagebehälter 2 zugewandten Seite von der Trennwand 10 und an der gegenüberliegenden Seite von einer in horizontaler Richtung verstellbaren Seitenwand 32 begrenzt. Die lichte Weite des Zuführschachtes 12 läßt sich somit entsprechend dem Durchmesser der zu verarbeitenden Wursthüllen einstellen. Die lichte Weite darf allerdings nur geringfügig größer als der Durchmesser der zu verarbeitenden Wursthüllen sein, damit die Wursthüllen nur der Reihe nach hintereinander in Richtung quer zu ihrer Länge vom Vorlagebehälter 2 durch den Zuführschacht 12 infolge des Schwerkrafteinflusses nach unten fallen.

An zwei sich gegenüberliegenden Seiten des unteren Endes des Zuführschachtes 12 sind zwei Rückhalteklappen 40a, b um Gelenke 42a, b drehbar gehaltert, deren Gelenkachsen im wesentlichen horizontal verlaufen. Die Rückhalteklappen 40a, b sind zwischen einer waagerechten Verschlußstellung (in Fig. 1 dargestellt) und einer senkrechten geöffneten Stellung, in der sie nach unten aufgeklappt sind eine Verlängerung des Zuführschachtes 12 bilden, verschwenkbar. Dabei werden die Rückhalteklappen 40a, b durch die Kraft einer nicht dargestellten Feder in der waagerechten Verschlußstellung gehalten. Wie Fig. 1 ferner zu entnehmen ist, sind die Rückhalteklappen 40a, b in ihrer Breite so ausgelegt, daß sie in der Verschlußstellung einen Spalt zwischen sich bilden. Aufgrund dieser Anordnung ragen die Rückhalteklappen 40a, b in der geöffneten Stellung nur ein kurzes Stück nach unten. Anzumerken ist noch, daß sich die Rückhalteklappen 40a, b über die gesamte Längsbreite des Zuführschachtes 12 erstrecken und dementsprechend eine längliche Form besitzen.

Unterhalb des unteren Endes des Zuführschachtes 12 sind zwei sich gegenüberliegende, im wesentlichen vertikal angeordnete Zangenhälften 44a, b vorgesehen, die gemeinsam eine Zange zum Greifen einer Wursthülle bilden. Die Zangenhälften 44a, b erstrecken sich im wesentlichen in horizontaler Richtung und sind an Bügeln 46a, b befestigt. Die Bügel 46a, b hängen an Schlitten 48a, b, die entlang zweier Führungswellen 50a, b verschiebbar gehaltert sind. Die eine Führungswelle 50a ist an der einen Seite und die andere Führungswelle 50b an der anderen Seite des Zuführschachtes 12 angeordnet. Beide Führungswellen 50a, b verlaufen horizontal und parallel zueinander und auch im wesentlichen parallel zum Zuführschacht 12. Die Schlitten 48a, b führen eine Längsbewegung aus, die mindestens der Länge eines noch später näher zu beschreibenden Füllrohres entspricht. Geführt werden die Schlitten 48a, b von einer nicht dargestellten Stangenführung oder einer geeigneten Längsführung. Die Längsbewegung wird von einem nicht dargestellten Zylinder mit Hubbegrenzung und Dämpfung ausgeführt. Ferner erlauben die Schlitten 48a, b eine Drehbewegung um die Führungswellen 50a, b wodurch die Zangenhälften 44a, b in Querrichtung zur Länge der Wursthülle und zur Bewegungsrichtung der Wursthülle aus dem Zuführschacht 12 zum Schließen aufeinanderzu- und zum Öffenen voneinanderwegbewegt werden können.

Die auf die Wursthülle gerichtete, seitlich angeordnete Greiffläche jeder Zangenhälfte 44a, b besteht aus zwei etwa rechtwinklig zueinander angeordneten Hälften, die mit der Wursthülle in tangentiale Berührung gelangen, wenn sich die Zangenhälften 44a, b schließen. Demnach sind die Zangenhälften 44a, b prismaartig ausgebildet. In Fig. 1 sind die Zangenhälften 44a, b in ihrer Schließstellung dargestellt, in der sie eine Wursthülle 56 mit ihren Greifflächen tangential berühren.

An der Unterseite der Rückhalteklappen ist jeweils ein Nocken 52a bzw. b angebracht. In der Schließstellung der Rückhalteklappen 40a, b und der Zangenhälften 44a, b überlappen die Nocken 52a, b die Zangenhälften 44a, b an deren Außenseiten, wie in Fig. 1 dargestellt ist. Werden die Zangenhälften 44a, b beim Öffnen auseinandergefahren, so werden die Nocken 52a, b von den Zangenhälften 44a, b betätigt und nach außen gedrückt, wodurch die Rückhalteklappen 40a, b von ihrer in Fig. 1 dargestellten Schließstellung in die geöffnete Stellung aufgeklappt werden.

Unterhalb der Zangenhälften 44a, b ist ein Auflageelement 54 im wesentlichen mit der Mittelebene des Zuführschachtes 12 fluchtend angeordnet. Der Abstand des Auflageelementes 54 zu den Rückhalteklappen 40a, b ist etwas größer als der Durchmesser einer Wursthülle. Das Auflageelement 54 besitzt eine Auflagefläche zur Auflage der untersten Wursthülle 56. Die Auflagefläche des Auflageelementes 54 ist prismaartig ausgebildet und besteht aus zwei in einem stumpfen Winkel zueinander angeordneten, mit der Wursthülle 56 in tangentiale Berührung bringbaren Hälften.

Die Rückhalteklappen 40a, b, die Zangenhälften 44a, b und das Auflageelement 54 bilden zusammen eine Ausgabeeinrichtung zum Vereinzeln und Ausgeben der Wursthüllen aus dem Zuführschacht 12. Nachfolgend soll die Funktion dieser Ausgabeeinrichtung beschrieben werden.

Zur Aufnahme einer Wursthülle werden die Zangenhälften 44a, b auseinandergefahren, wobei durch Betätigung der Nocken 52a, b die Rückhalteklappen 44a, b geöffnet werden. Die Rückhalteklappen 40a, b stehen jetzt senkrecht und bilden somit eine Verlängerung des Zuführschachtes 12. Die unterste Wursthülle einer im Zuführschacht 12 übereinanderliegenden Reihe von Wursthüllen kann jetzt aus dem Zuführschacht 12 auf das Auflageelement 54 fallen. Dementsprechend rückt die darüberliegende Reihe von weiteren Wursthüllen nach, so daß sich nun die nächsthöhere Wursthülle 58 als unterste Wursthülle im Zuführschacht 12 befindet. Anschließend werden die Zangenhälften 44a, b in Richtung auf die auf dem Auflageelement 54 liegende Wursthülle 56 verfahren und umschließen die Wursthülle 56 auf ihrer gesamten Länge. Aufgrund der Federwirkung drehen die Rückhalteklappen 40a, b wieder zurück in die in Fig. 1 gezeigte waagerechte Schließstellung. Dabei heben sie die nächsthöhere, im Zuführschacht 12 verbliebene Wursthülle 58 und die daraufliegende Reihe weiterer Wursthüllen an, so daß zwischen den Wursthüllen 56 und 58 ein Spalt entsteht und die unterste Wursthülle 56 nicht mehr von dem Gewicht der nächsthöheren Wursthülle 58 und der darüberliegenden Wursthüllen belastet wird. Die Greifflächen der Zangenhälften 44a, b sind so ausgebildet, daß sie die erfaßte Wursthülle 56 ein wenig vom Auflageelement 54 anheben. Nun befindet sich die unterste Wursthülle 56 weder in Berührung mit der nächsthöheren Wursthülle noch mit dem Auflageelement 54, sondern wird lediglich von den Zangenhälften 44a, b gehalten. Diese Stellung ist in Fig. 1 gezeigt.

Die Schlitten 48a, b fahren nun ungehindert die von den Zangenhälften 44a, b gehaltene Wursthülle aus dem Bereich unterhalb des Zuführschachtes 12 heraus und schieben die Wursthülle 56 auf ein bereitstehendes Füllrohr 60, wie in Fig. 2 dargestellt ist. Die Schnittlinien beider Greifflächenhälften der beiden Zangenhälften 44a, b und die Achse 62 des Füllrohres 60 liegen in einer gemeinsamen Ebene. Zusätzlich sind die Greifflächen punktsymmetrisch zur Achse 62 des Füllrohres 60 angeordnet. Durch diese Maßnahmen wird erreicht, daß die Wursthülle 56 nach Umschließen durch die Zangenhälften 44a, b koaxial zum Füllrohr 60 ausgerichtet wird.

Ist die Wursthülle dann auf das Füllrohr 60 aufgeschoben, wie Fig. 2 zeigt, öffnen die Zangenhälften 44a, b, und das Füllrohr 60 kann in eine nicht dargestellte Abfüllstellung schwenken. Daraufhin schließen die Zangenhälften 44a, b wieder und werden mit Hilfe der Schlitten 48a, b unter den Zuführschacht 12 zurückgefahren. Der nächste Zyklus zum Vereinzeln und Ausgeben wird nun bei der nächsten Wursthülle entsprechend wiederholt.

## Patentansprüche

1. Magazinvorrichtung für Wursthüllen, insbesondere für in ihrer Längsrichtung raupenförmig zusammengeraffte Wursthüllen,
mit
- einem eine Bodenplatte (14) aufweisenden Vorlagebehälter (2) zur Aufnahme mehrerer Lagen von Wursthüllen und
- einem gegenüber der Horizontalen geneigten, vom Vorlagebehälter (2) nach unten zu Ausgabemitteln (40 bis 54) zur Ausgabe einer Wursthülle (56) führenden Zuführschacht (12), dessen lichte Weite nur geringfügig größer als der Durchmesser der Wursthüllen ist und durch den sich die Wursthüllen der Reihe nach hintereinander in Richtung quer zu ihrer Länge vom Vorlagebehälter (2) zu den Ausgabemitteln (40 bis 54) infolge Schwerkrafteinflusses bewegen,
dadurch gekennzeichnet, daß
- der Zuführschacht (12) mit seinem oberen Ende in den Vorlagebehälter (2) hineinragt und
- die Bodenplatte (14) des Vorlagebehälters (2) zwischen einer untersten Stellung, in der die Bodenplatte (14) mit einem direkt vor dem Zuführschacht (12) endenden Randbereich (22) unterhalb des oberen Endes des Zuführschachtes (12) liegt, und einer obersten Stellung bewegbar ist, in der sich der Randbereich (22) der Bodenplatte (14) im wesentlichen mindestens auf der Höhe der Oberkante (24) des oberen Endes des Zuführschachtes (12) befindet, wobei der Abstand zwischen der Kante des Randbereiches (22) und der gegenüberliegenden Außenseite (10) des Zuführschachtes (12) über den gesamten Bewegungsweg kleiner als der Durchmesser der Wursthüllen ist.

2. Vorrichtung nach Anspruch 1,
dadurch gekennzeichnet, daß die Bodenplatte (14) um ein im Abstand zum Zuführschacht (12) angeordnetes Gelenk (16) verschwenkbar ist.

3. Vorrichtung nach Anspruch 1 oder 2,
dadurch gekennzeichnet, daß die Bodenplatte (14) in ihrer untersten Stellung zum Zuführschacht (12) hin schräg nach unten geneigt ist.

4. Vorrichtung nach Anspruch 3,
dadurch gekennzeichnet, daß der Neigungswinkel der Bodenplatte (14) gegenüber der Horizontalen in der untersten Stellung etwa 15° beträgt.

5. Vorrichtung nach einem der Ansprüche 1 bis 4,
dadurch gekennzeichnet, daß der vor dem Zuführschacht (12) endende Randbereich (22) der Bodenplatte (14) gegenüber dem übrigen Bereich der Bodenplatte (14) entlang einer Knicklinie (20) nach unten abgekantet und in der obersten Stellung der Bodenplatte (14) zur Oberkante (24) des oberen Endes des Zuführschachtes (12) hin schräg nach unten geneigt ist, wobei die Breite des abgekanteten Randbereiches (22) zwischen dessen Kante und der Knicklinie (23) mindestens dem größten Durchmesser einer zu verarbeitenden Wursthülle entspricht.

6. Vorrichtung nach Anspruch 5,
dadurch gekennzeichnet, daß der Neigungswinkel des abgekanteten Randbereiches (22) der Bodenplatte (14) in deren oberster Stellung etwa 15° gegenüber der Horizontalen beträgt.

7. Vorrichtung nach Anspruch 5 und 6 und Anspruch 2,
dadurch gekennzeichnet, daß die Bodenplatte (14) in ihrer obersten Stellung von der Knicklinie (23) in Richtung auf das Gelenk (16) schräg nach unten geneigt verläuft.

8. Vorrichtung nach einem der Ansprüche 1 bis 7,
gekennzeichnet durch eine Antriebseinrichtung (18) zum Bewegen der Bodenplatte (14) und einen im Zuführschacht (1) angeordneten Sensor (30) zur Erfassung einer im Zuführschacht (12) geführten Wursthülle und zur Ansteuerung der Antriebseinrichtung (18) derart, daß diese die Bodenplatte (14) von ihrer untersten Stellung so lange nach oben bewegt, bis der Sensor (30) eine Wursthülle erfaßt hat, woraufhin die Antriebseinrichtung (18) die Bodenplatte (14) wieder in die unterste Stellung zurückbewegt.

9. Vorrichtung nach einem der Ansprüche 1 bis 8,
dadurch gekennzeichnet, daß der Zuführschacht (12) seitlich an den Vorlagebehälter (2) angesetzt und gegenüber dem Vorlagebehälter (2) durch eine gemeinsame Trennwand (10) seitlich abgetrennt ist, entlang derer die Bodenplatte (14) mit ihrem Randbereich (22) bewegbar ist.

10. Vorrichtung nach einem der Ansprüche 1 bis 9,
dadurch gekennzeichnet, daß der Zuführschacht (12) im wesentlichen lotrecht verläuft.

11. Magazinvorrichtung für Wursthüllen, insbesondere für in ihrer Längsrichtung raupenförmig zusammengeraffte Wursthüllen, nach einem der Ansprüche 1 bis 10,
mit
- einem gegenüber der Horizontalen geneigten Zuführschacht (12), dessen lichte Weite nur geringfügig größer als der Durchmesser der Wursthüllen ist und durch den sich die Wursthüllen der Reihe nach hintereinander in Richtung quer zu ihrer Länge infolge Schwerkrafteinflusses nach unten bewegen, und
- unterhalb des unteren Endes des Zuführschachtes (12) angeordneten Ausgabemitteln (40 bis 54) zur Ausgabe einer Wursthülle (56) in Richtung einer Aufzieheinrichtung zum Aufziehen der Wursthülle (56) auf ein Füllrohr (60),
dadurch gekennzeichnet, daß die Ausgabemittel umfassen:
- ein unterhalb des unteren Endes des Zuführschachtes (12) angeordnetes Auflageelement (54) zum Abstützen einer Wursthülle (56),
- am unteren Ende des Zuführschachtes (12) bewegbar gehalterte Verschlußmittel (40a, b), die in einer geöffneten Stellung ein Herausfallen der untersten Wursthülle (56) aus dem Zuführschacht (12) auf das Auflageelement (54) erlauben und bei Bewegung in eine Schließstellung die innerhalb des Zuführschachtes befindliche, nächsthöhere Wursthülle (58) mit den ggf. darauf liegenden weiteren Wursthüllen von der auf dem Auflageelement (54) liegenden Wursthülle (56) abhebt und den Zuführschacht (12) verschließen, und
- Greifmitteln (44a, b) die die auf dem Auflageelement (54) liegende Wursthülle (56) greifen, von dem Auflageelement (54) ein wenig anheben, ohne die Wursthülle in Berührung mit den darüber befindlichen Verschlußmitteln (40a, b) oder der von diesen gehaltenen nächsthöheren Wursthülle (58) zu bringen, und zu der Aufzieheinrichtung transportieren.

12. Vorrichtung nach Anspruch 11,
dadurch gekennzeichnet, daß die Greifmittel (44a, b) die Wursthülle (56) vom Auflageelement (54) in koaxiale Ausrichtung zum Füllrohr (60) der Aufzieheinrichtung anheben.

13. Vorrichtung nach Anspruch 11 oder 12,
dadurch gekennzeichnet, daß als Greifmittel eine Zange mit zwei sich gegenüberliegenden und zwischen sich die Wursthülle (56) aufnehmenden Zangenhälften (44a, b) vorgesehen ist, die in Querrichtung zur Länge der Wursthülle (56) zum Schließen aufeinanderzu und zum Öffnen voneinanderweg bewegbar sind.

14. Vorrichtung nach Anspruch 13,
dadurch gekennzeichnet, daß die auf die Wursthülle (56) gerichtete Greiffläche der Zangenhälften (44a, b) aus zwei winklig zueinander angeordneten, mit der Wursthülle (56) in tangentiale Berührung bringbaren Hälften besteht.

15. Vorrichtung nach Anspruch 12 und 14,
dadurch gekennzeichnet, daß die Schnittlinien beider Greifflächenhälften der beiden Zangenhälften (44a, b) und die Achse (62) des Füllrohres (60) in einer gemeinsamen Ebene liegen.

16. Vorrichtung nach einem der Ansprüche 11 bis 15,
dadurch gekennzeichnet, daß als Verschlußmittel mindestens eine drehbar gehalterte Klappe vorgesehen ist.

17. Vorrichtung nach Anspruch 16,
dadurch gekennzeichnet, daß als Verschlußmittel zwei an gegenüberliegenden Seiten des unteren Endes des Zuführschachtes (12) drehbar gehalterte Rückhalteklappen (40a, b) vorgesehen sind, die in ihrer geöffneten Stellung eine Verlängerung des unteren Endes des Zuführschachtes (12) und in ihrer Schließstellung einen Spalt zwischen sich bilden, der schmaler als der Durchmesser der Wursthüllen ist.

18. Vorrichtung nach einem der Ansprüche 11 bis 17,
dadurch gekennzeichnet, daß die Verschlußmittel (40a, b) entweder in die Schließstellung oder in die geöffnete Stellung federnd vorgespannt sind.

19. Vorrichtung nach einem der Ansprüche 11 bis 18,
dadurch gekennzeichnet, daß die Verschlußmittel (40a, b) von den Greifmitteln (44a, b) bewegt werden.

20. Vorrichtung nach Anspruch 19,
dadurch gekennzeichnet, daß die Verschlußmittel (40a, b) für die Bewegung in die geöffnete Stellung mit den Greifmitteln (44a, b) mechanisch gekoppelt sind.

21. Vorrichtung nach den Ansprüchen 13, 18 und 20,
dadurch gekennzeichnet, daß an den Rückhalteklappen (40a, b) Nocken (52a, b) befestigt sind, die beim Öffnen der Zangenhälften (44a, b) von diesen so betätigt werden, daß die Rückhalteklappen (40a, b) in die geöffnete Stellung gedreht werden.

22. Vorrichtung nach einem der Ansprüche 11 bis 21,
dadurch gekennzeichnet, daß die Auflagefläche des Auflageelementes (54) aus zwei winklig zueinander angeordneten, mit der aufliegenden Wursthülle (56) in tangentiale Berührung bringbaren Hälften besteht.

## Claims

1. Storage device for sausage casings, particularly for sausage casings gathered in longitudinal direction like a caterpillar, comprising
- a receiver (2) which serves for receiving several layers of sausage casings and has a bottom plate (14), and
- a feeding shaft (12) which is inclined to the horizontal, leads from the receiver (2) downwards to discharge means (40 to 54) for discharging a sausage casing (56), the clear width of which is only slightly greater than the diameter of the sausage casings and through which the sausage casings move, one after another, in the direction transversely to their length from the receiver (2) to the discharge means (40 to 54) under the influence of gravity,
characterised in that
- the feeding shaft (12) extends with its upper end into the receiver (2), and
- the bottom plate (14) of the receiver (2) is movable between a lowermost position, in which the bottom plate (14) lies with a marginal portion (22), which ends immediately upstream of the feeding shaft (12), below the upper end of the feeding shaft (12), and an uppermost position, in which the marginal portion (22) of the bottom plate (14) is situated substantially at least at the height of the upper edge (24) of the upper end of the feeding shaft (12), while the distance between the edge of the marginal portion (22) and the opposite outer side (10) of the feeding shaft (12) is, over the whole path of the movement, smaller than the diameter of the sausage casings.

2. Device according to claim 1, characterised in that the bottom plate (14) is pivotable about a joint (16) spaced from the feeding shaft (12).

3. Device according to claim 1 or 2, characterised in that in its lowermost position the bottom plate (14) is inclined downwards towards the feeding shaft (12).

4. Device according to claim 3, characterised in that the angle of inclination of the bottom plate (14) to the horizontal in the lowermost position is about 15°.

5. Device according to any one of claims 1 to 4, characterised in that the marginal portion (22) of the bottom plate (14), which ends upstream of the feeding shaft (12), is deflected downwards with respect to the remaining portion of the bottom plate (14) along a sharp bend line (20) and in the uppermost position of the bottom plate (14) is inclined downwards to the upper edge (24) of the upper end of the feeding shaft (12), while the width of the deflected marginal portion (22) between its edge and the sharp-bend line (23) corresponds at least to the largest diameter of a sausage casing to be processed.

6. Device according to claim 5, characterised in that the angle of inclination of the deflected marginal portion (22) of the bottom plate (14) to the horizontal in the uppermost position is about 15°.

7. Device according to claim 5 and 6 and claim 2, characterised in that in its uppermost position the bottom plate (14) extends with downward inclination from the sharp-bend line (23) in the direction to the joint (16).

8. Device according to any one of claims 1 to 7, characterised by a drive (18) for the movement of the bottom plate (14) and a sensor (30), situated in the feeding shaft (1) and serving to detect a sausage casing guided in the feeding shaft (12) and to control the drive (18) such that it moves the bottom plate (14) from its lowermost position for so long until the sensor (30) detects a sausage casing, whereupon the drive (18) returns the bottom plate (14) to its lowermost position.

9. Device according to any one of claims 1 to 8, characterised in that the feeding shaft (12) is positioned laterally on the receiver (2) and is from the receiver (2) laterally separated by a common partition (10) along which is movable the bottom plate (14) with its marginal portion (22).

10. Device according to any one of claims 1 to 9, characterised in that the feeding shaft (12) extends substantially vertically.

11. Storage device for sausage casings, particularly for sausage casings gathered in longitudinal direction like a caterpillar, according to any one of claims 1 to 10, comprising
- a feeding shaft (12) which is inclined to the horizontal, the clear width of which is only slightly greater than the diameter of the sausage casings and through which the sausage casings move, one after another, in the direction transversely to their length downwards under the influence of gravity, and
- discharge means (40 to 54) which are situated below the lower end of the feeding shaft (12) and serve to discharge a sausage casing (56) in the direction to the slip-on device for slipping-on the sausage casing (56) onto a filling tube,
characterised in that the discharge means include:
- a support element (54) which is situated below the lower end of the feeding shaft (12) and serves for supporting a sausage casing (56),
- closure means (40a,b), which are movably situated at the bottom end of the feeding shaft (12), which enable, in an open position, falling of the lowermost sausage casing (56) out of the feeding shaft (12) onto the support element (54) and during movement to a closed position lift the nearest higher sausage casing (58) situated in the feeding shaft, together with the further sausage casings which may lie therein, from the sausage casing (56) which lies on the support element (54) and close the feeding shaft (12), and
- gripping means (44a,b) which grip the sausage casing (56) which lies on the support element (54), lift it somewhat from the support element (54) without getting the sausage casing into contact with the closure means (40a,b) situated above it or the nearest higher sausage casing (58) held thereby, and transport it to the slip-on device.

12. Device according to claim 11, characterised in that the gripping means (44a,b) lift the sausage casing (56) to the filling tube (60) of the slip-on device such that it is coaxial therewith.

13. Device according to claim 11 or 12, characterised in that the gripping means are in the form of pliers having two plier halves (44a,b), which are situated opposite to each other, receive between them the sausage casing (56) and are movable in transverse direction to the length of the sausage casing (56) towards each other for closing and away from each other for opening.

14. Device according to claim 13, characterised in that the gripping surface of the plier halves (44a,b) facing the sausage casing (56) is composed of two halves which extend at an angle with respect to each other and may be brought into tangential contact with the sausage casing (56).

15. Device according to claim 12 and 14, characterised in that the sectional lines of both gripping surface halves of both the plier halves (44a,b) and the axis (62) of the filling tube (60) lie in a common plane.

16. Device according to any one of claims 11 to 15, characterised in that the closure means are in the form of at least one rotatably mounted flap.

17. Device according to claim 16, characterised in that the closure means are in the form of two retaining flaps (40a,b) which are rotatably mounted on opposite sides of the bottom end of the feeding shaft (12) and which form in their open position an extension of the bottom end of the feeding shaft (12) and in their closed position form a gap between themselves which is narrower than the diameter of the sausage casings.

18. Device according to any one of claims 11 to 17, characterised in that the closure means (40a,b) are resiliently pretensed either to the closed position or the open position.

19. Device according to any one of claims 11 to 18, characterised in that the closure means (40a,b) are moved by the gripping means (44a,b).

20. Device according to claim 19, characterised in that the closure means (40a,b) are mechanically coupled with the gripping means (44a,b) for the movement to the open position.

21. Device according to claims 13, 18 and 20, characterised in that cams (52a,b) are fixed on the retaining flaps (40a,b) which during opening of the plier halves (44a,b) are actuated thereby such that the retaining flaps (40a,b) are pulled to the closed position.

22. Device according to any one of claims 11 to 21, characterised in that the support surface of the support element (54) is composed of two halves which are situated at an angle with respect to each other and may be brought into tangential contact with the supported sausage casing (56).

## Revendications

1. Magasin pour boyaux de saucisses en particulier pour des boyaux de saucisses serrées les unes contre les autres en forme de chenilles dans leur direction longitudinale,
avec
- un réservoir collecteur (2) présentant une plaque de fond (14) pour recueillir plusieurs couches de boyaux de saucisses et
- un puits d'alimentation (12) incliné par rapport à l'horizontale pour délivrer un boyau de saucisse (56) depuis le réservoir collecteur vers le bas jusqu'à des moyens de sortie (40 à 54), dont la largeur intérieure n'est que légèrement supérieure au diamètre des boyaux de saucisses et à travers laquelle les boyaux de saucisses se déplacent par gravité, rangée par rangée, les uns derrière les autres en direction perpendiculaire à leur longueur depuis le réservoir collecteur (2) jusqu'aux moyens de sortie (40 à 54),
caractérisé en ce que
- le puits d'alimentation (12) fait saillie par son extrémité supérieure dans le réservoir collecteur (2) et
- la plaque de fond (14) du réservoir collecteur (2) est mobile entre une position basse dans laquelle la plaque de fond (14) repose en contrebas de l'extrémité supérieure du puits d'alimentation (122) avec une zone de bordure (22) se terminant directement devant le puits d'alimentation (12), et une position haute dans laquelle la zone de bordure (22) de la plaque de fond (14) se trouve essentiellement au moins à la hauteur du bord supérieur 24 de l'extrémité supérieure du puits d'alimentation (12) de façon que la distance entre le bord de la zone de bordure (22) et la face extérieure (10) du puits d'alimentation (12) lui faisant face soit inférieure au diamètre du boyau de saucisse sur toute la course de déplacement.

2. Magasin selon la revendication 1 caractérisé en ce que la plaque de fond (14) est basculable autour d'une articulation (16) disposée à distance du puits d'alimentation (12).

3. Magasin selon la revendication 1 ou 2 caractérisé en ce que la plaque de fond (14) est inclinée, dans sa position basse, de façon inclinée vers le bas en allant vers le puits d'alimentation (12).

4. Magasin selon la revendication 3 caractérisé en ce que l'angle d'inclinaison de la plaque de fond (14) par rapport à l'horizontale est d'environ 15 degrés en position basse.

5. Magasin selon l'une des revendications 1 à 4 caractérisé en ce que la zone de bordure (22) de la plaque de fond (14) se terminant devant le puits d'alimentation (12) est repliée vers le bas le long d'une ligne de repli (23) par rapport à la zone restante de la plaque de fond (14), et est inclinée vers le bas en direction du bord supérieur de l'extrémité supérieure du puits d'alimentation (12) dans la position haute de la plaque de fond (14), de façon que la largeur de la zone de bordure (22) repliée entre ledit bord et la ligne de repli (23) corresponde au moins au diamètre le plus gros d'un boyau de saucisse à travailler.

6. Magasin selon la revendication 5 caractérisé en ce que l'angle d'inclinaison de la zone de bordure (22) repliée de la plaque de fond (14) est d'environ 15 degrés par rapport à l'horizontale dans la position haute.

7. Magasin selon la revendication 5 et 6 et la revendication 2 caractérisé en que la plaque de fond (14) s'étend de façon inclinée vers le bas dans sa position haute, depuis une ligne de repli (23) en direction de l'articulation (16).

8. Magasin selon l'une des revendications 1 à 7 caractérisé par un mécanisme d'entraînement (18) pour déplacer la plaque de fond (14) et un capteur (30) disposé dans le puits d'alimentation (1) pour détecter un boyau de saucisse passant dans le puits d'alimentation (12) et pour activer le mécanisme d'entraînement (18) de façon que celui-ci entraîne vers le haut la plaque de fond (14) depuis sa position basse jusqu'à ce que le capteur (30) détecte un boyau de saucisse, ce sur quoi le mécanisme d'entraînement (18) ramène la plaque de fond (14) en position basse.

9. Magasin selon l'une des revendications 1 à 8 caractérisé en ce que le puits d'alimentation (12) est disposé latéralement par rapport au réservoir collecteur (2) et est séparé du réservoir collecteur (2) par une paroi commune (10), le long de laquelle est déplaçable la plaque de fond (14) par sa zone de bordure (22).

10. Magasin selon l'une des revendications 1 à 9 caractérisé en ce que le puits d'alimentation (12) s'étend en direction essentiellement verticale.

11. Magasin pour boyaux de saucisses en particulier pour des boyaux de saucisses serrés les uns contre les autres en forme de chenilles selon leur direction longitudinale, selon l'une des revendications 1 à 10,
avec
- un puits d'alimentation (12) incliné par rapport à l'horizontale, dont la largeur intérieure n'est que légèrement supérieure au diamètre des boyaux de saucisses et dans lequel les boyaux de saucisses se déplacent vers le bas par gravité, rang par rang, les uns derrière les autres, en direction perpendiculaire à leur longueur, et
- un moyen de sortie (40 à 54) disposé en contrebas de l'extrémité inférieure du puits d'alimentation (12) pour délivrer un boyau de saucisse (56) en direction d'un élévateur pour élever le boyau de saucisse (56) sur un tube de remplissage (60),
caractérisé en ce que les moyens de sortie comprennent :
- un élément support (54) disposé sous l'extrémité inférieure du puits d'alimentation (12) pour supporter un boyau de saucisse (56),
- des moyens d'obturation (40a, b) montés mobiles à l'extrémité inférieure du puits d'alimentation (12), qui permettent en position ouverte la chute du boyau de saucisse inférieur (56) depuis le puits d'alimentation (12) sur l'élément support (54), et qui, par déplacement en position de fermeture, soulèvent le boyau de saucisse (58) immédiatement supérieur se trouvant dans le puits d'alimentation avec les autres boyaux de saucisses qui se trouvent au dessus en les séparant du boyau de saucisse (56) se trouvant sur l'élément support (54), et en obturant le puits d'alimentation (12), et
- des moyens de préhension (44 a, b) qui saisissent le boyau de saucisse (56) se trouvant sur l'élément de support (54), le soulèvent légèrement de l'élément support (54) sans amener le boyau de saucisse en contact avec les moyens de fermeture (40 a, b) se trouvant au dessus ni avec le boyau de saucisse (58) immédiatement supérieur retenu par ceux-ci, et le transportent vers l'élévateur.

12. Magasin selon la revendication 11 caractérisé en ce que les moyens de préhension (44 a, b) soulèvent le boyau de saucisse (56) depuis l'élément support (54) en direction coaxiale au tube de remplissage (60) de l'élévateur.

13. Magasin selon la revendication 11 ou 12 caractérisé en ce qu'on utilise comme moyens de préhension une pince avec deux demi-becs (44a, b) se faisant face et agrippant entre eux le boyau de saucisse (56), qui sont déplaçables transversalement l'un vers l'autre pour la fermeture et en direction contraire pour l'ouverture transversalement à la longueur du boyau de saucisse (56).

14. Magasin selon la revendication 13 caractérisé en ce que la surface de préhension du côté du boyau de saucisse (56) est constituée de deux moitiés articulées l'une à l'autre et susceptibles d'être amenées en contact tangentiel avec le boyau de saucisse (56).

15. Magasin selon la revendication 12 et 14 caractérisé en ce que la ligne de séparation des deux demi-surfaces de préhension des demi-becs (44 a, b) est dans le même plan que l'axe (62) du tube de remplissage (60).

16. Magasin selon l'une des revendications 11 à 15 caractérisé en ce qu'on utilise au moins un volet monté rotatif comme moyen d'obturation.

17. Magasin selon la revendication 16 caractérisé en ce que les moyens d'obturation sont constitués par deux volets de retenue montés rotatifs à des extrémités se faisant face de l'extrémité inférieure du puits d'alimentation (12) qui constituent dans leur position ouverte un prolongement de l'extrémité inférieure du puits d'alimentation (12), et forment dans leur position fermée une fente qui est inférieure au diamètre des boyaux de saucisses.

18. Magasin selon l'une des revendications 11 à 17 caractérisé en ce que les moyens d'obturation (40 a, b) sont entraînés en rappel dans la position de fermeture ou dans la position d'ouverture.

19. Magasin selon l'une des revendications 11 à 18 caractérisé en ce que les moyens d'obturation (40 a, b) sont entraînés en déplacement par les moyens de préhension (44 a, b).

20. Magasin selon la revendication 19 caractérisé en ce que les moyens d'obturation (40 a, b) sont couplés mécaniquement avec les moyens de préhension (44 a , b) pour le déplacement en position ouverte.

21. Magasin selon les revendications 13, 18 et 20 caractérisé en ce que sur les volets de retenue (40 a, b) sont fixés des ergots (52 a, b) qui sont actionnés par les demi-becs (44 a, b) lors de leur ouverture de façon telle que les volets de retenue (40 a, b) sont basculés en position ouverte.

22. Magasin selon l'une 11 à 21 des revendications caractérisé en ce que la surface portante de l'élément support (54) est constituée de deux demi-surfaces inclinées l'une par rapport à l'autre susceptibles d'être amenées en contact tangentiel avec le boyau de saucisse (56) qui s'y trouve supporté.
